# EUROPÄISCHE PATENTSCHRIFT

(11) **EP 2 385 913 B1**
(45) Veröffentlichungstag und Bekanntmachung des Hinweises auf die Patenterteilung: **10.10.2012**
(21) Anmeldenummer: 10701448.2
(22) Anmeldetag: 07.01.2010
(51) Int. Cl.: B60T 17/04, F15B 21/04

(54) **DRUCKLUFTVERSORGUNGSEINRICHTUNG**
COMPRESSED AIR SUPPLY DEVICE
DISPOSITIF D'ALIMENTATION EN AIR COMPRIMÉ

(30) Priorität: 08.01.2009 DE 102009004021
(43) Veröffentlichungstag der Anmeldung: 16.11.2011
(73) Patentinhaber: Knorr-Bremse Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2010/000035
(87) Internationale Veröffentlichungsnummer: WO 2010/079128

(56) Entgegenhaltungen:
- WO-A1-00/26074
- WO-A1-95/07831
- WO-A1-2006/048640
- DE-A1- 19 721 230
- DE-A1-102007 011 256
- US-A- 5 792 245

## Beschreibung

Die Erfindung betrifft eine Druckluftversorgungseinrichtung, insbesondere für ein Nutzfahrzeug, mit einem Ventilgehäuse und einer mit dem Ventilgehäuse verbundenen wechselbaren Lufttrocknerpatrone, wobei das Ventilgehäuse und die Lufttrocknerpatrone durch Zusammenführen entlang einer axialen Achse miteinander koppelbar sind.

Eine derartige Einrichtung ist aus der DE 102007011256 A1 bekannt.

Derartige Druckluftversorgungseinrichtungen beliefern Druckluftverbraucher in Nutzfahrzeugen mit aufbereiteter Druckluft. Typische Druckluftverbraucher sind beispielsweise ein pneumatisches Bremssystem oder eine Luftfederung. Eine Druckluftversorgungseinrichtung vereinigt zahlreiche Funktionen. Eine wichtige Aufgabe besteht in der Trocknung und Reinigung der Luft. Zu diesem Zweck ist eine Lufttrocknerpatrone vorgesehen, die Filtereinrichtungen und ein Trockenmittel enthält. Andere wichtige Aufgaben bestehen in der Druckregelung der von einem Kompressor gelieferten Druckluft sowie in der sicheren Verteilung der Druckluft auf die verschiedenen Verbraucherkreise. Diese Aufgaben werden durch Ventileinrichtungen, die in einem Ventilgehäuse untergebracht sind, übernommen, nämlich einem Druckregler und einem Mehrkreisschutzventil. Moderne Druckluftversorgungseinrichtungen enthalten zusätzlich zu den pneumatischen Komponenten eine elektronische Steuerung sowie elektrisch ansteuerbare Komponenten, beispielsweise Magnetventile, und eine mit der elektronischen Steuerung in Verbindung stehende Sensorik. Die so ausgestatteten Druckluftversorgungseinrichtungen werden auch als EAC (Electronic Air Control) bezeichnet.

Da die Aufnahmefähigkeit der Lufttrocknerpatrone an Fremdstoffen und Feuchtigkeit begrenzt ist, muss diese in regelmäßigen zeitlichen Abständen bzw. in Abhängigkeit der Förderleistung des Kompressors regeneriert und schließlich ausgetauscht werden, weshalb die Lufttrocknerpatrone üblicherweise als leicht zugängliches und austauschbares Ersatzteil lösbar mit dem Ventilgehäuse koppelbar ist. Bei der Konstruktion der Lufttrocknerpatrone sind dabei Vorgaben hinsichtlich der verfügbaren Bauhöhe der Druckluftversorgungseinrichtung einzuhalten, wobei zusätzlich die Lufttrocknerpatrone in der Ebene senkrecht zur Bauhöhe der Druckluftversorgungseinrichtung nicht über das Ventilgehäuse überstehen soll. Die Beschränkung der Bauhöhe kann sich beispielsweise aus der verfügbaren Höhe zwischen der Oberkante des Fahrzeugrahmens und einem vorgegeben Böschungswinkel des Fahrzeugs, der ebenfalls einzuhalten ist, ergeben. Eine Beschränkung in der Ebene senkrecht zur Bauhöhe kann ebenfalls durch die Einbausituation, insbesondere den Fahrzeugrahmen vorgegeben werden. Die hierdurch entstehenden Beschränkungen hinsichtlich der verwendbaren Fläche für Luftein- und Luftauslassöffnungen an der Lufttrocknerpatrone tragen in nicht unerheblichem Ausmaß zu dem durch die Druckluftversorgungseinrichtung verursachten Staudruck bei. Dieser Staudruck muss bei der Erzeugung der Druckluft durch den Kompressor überwunden werden und erhöht dadurch den Energieverbrauch der Druckluftversorgungseinrichtung. Beim Beenden einer Förderphase wird dieser zusätzliche Staudruck in die Atmosphäre abgelassen, wodurch diese Druckenergie verloren geht. Des Weiteren ist die Verwendung bestimmter Bauweisen von Drucklufterzeugern bei zu hohem Staudruck systembedingt nicht möglich.

Die Aufgabe der vorliegenden Erfindung besteht daher darin, den während der Druckluftaufbereitung in der Druckluftversorgungseinrichtung abfallenden Staudruck zu reduzieren.

Diese Aufgabe wird durch das Merkmal des unabhängigen Anspruchs gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass eine von einer Dichtung an der Lufttrocknerpatrone eingeschlossene Fläche gegenüber der axialen Achse der Lufttrocknerpatrone in einem nicht rechten Winkel geneigt ist. Durch das Neigen der von der Dichtung eingeschlossenen Fläche in einen nicht rechten Winkel gegenüber der axialen Achse kann die Fläche im Vergleich zum Querschnitt vergrößert werden, ohne dass sonstige bauliche Abmessungen der Druckluftversorgungseinrichtung geändert werden müssen. Auf diese Weise ist ein an der Fläche entstehender Staudruck reduzierbar, wodurch Energie eingespart werden kann, da der Kompressor den hohen Staudruck nicht überwinden muss und das dem hohen Staudruck zugehörige Luftvolumen nicht bei jeder Regeneration entweicht. Des Weiteren können Werkstoffdicken reduziert werden und ein Prüfdruck eines Druckkessels abgesenkt werden. Als Querschnitt bzw. Querschnittsfläche wird dabei explizit die Schnittfläche senkrecht zu der axialen Achse verstanden. Eine Kopplung zwischen Ventilgehäuse und Lufttrocknerpatrone erfolgt entlang der von der Dichtung eingeschlossenen Fläche. Darüber hinaus wird eine Montage der Lufttrocknerpatrone ohne Beschädigung der Dichtung am Lufttrocknerhals mit reduziertem Kraftaufwand möglich, infolge der langsamen kontinuierlichen axialen Dichtungsüberschneidung. Aufgrund der zur Montagerichtung geneigten Fläche kann weiterhin bei der Montage der Lufttrocknerpatrone ein Verdrehen der Dichtung auf dem Hals des Mutterteils mit dem an der Lufttrocknerpatrone angeordneten Vaterteil ausgeschlossen werden.

Besonders bevorzugt ist in diesem Zusammenhang, dass ein in dem Ventilgehäuse angeordnetes, im gekoppelten Zustand an die Dichtung an der Lufttrocknerpatrone anschließendes Anschlussstück sich in seiner Querschnittsfläche zumindest bis auf die von der Dichtung eingeschlossene Fläche aufweitet, wobei die Aufweitung lokal direkt unterhalb der Dichtung erfolgt. Im Bereich der Dichtung ist also die Verbindung zwischen Lufttrocknerpatrone und Ventilgehäuse quasi eingeschnürt, da auf der dem Ventilgehäuse angewandten Seite ebenfalls lokal eine Aufweitung erfolgt. Durch die direkt unterhalb der Dichtung erfolgende Aufweitung des Anschlussstücks wird der im Bereich des Lufttrocknerpatrone entstehende Staudruck jedoch nicht einfach durch den Anschlussquerschnitt, sondern durch die größere von der Dichtung eingeschlossene Fläche bestimmt. Physikalisch ist dies eine Folge der Kompressibilität der Druckluft, wobei sich der Staudruck aus lokalen Strömungsquerschnitten ergibt.

Nützlicherweise kann vorgesehen sein, dass im Bereich des Anschlussstücks eine Heizung angeordnet ist. Im Bereich der Dichtung bzw. der direkt anschließenden lokal erfolgenden Aufweitung ist ein Temperaturabfall an dem entstehenden Versatz in dem Anschlussstück möglich, wobei die Heizung eine Vereisung in diesem Bereich unterbindet.

Es kann vorgesehen sein, dass das Ventilgehäuse und die Lufttrocknerpatrone Einrichtungen aufweisen, die eine dichte Verbindung zwischen dem Ventilgehäuse und der Lufttrocknerpatrone nicht in allen mit Bezug auf die axiale Achse der Lufttrocknerpatrone definierten Winkelpositionen der Lufttrocknerpatrone gegenüber dem Ventilgehäuse zulassen. Bei der Montage wird man somit gezwungen, bestimmte Winkelpositionen der Lufttrocknerpatrone gegenüber dem Ventilgehäuse einzuhalten. Dies kann die Montagearbeit erleichtern. Zusätzlich kann auf der Grundlage einer Abstimmung der an dem Ventilgehäuse und der Lufttrocknerpatrone angebrachten Einrichtung sichergestellt werden, dass nur eine geeignete Lufttrocknerpatrone auf das Ventilgehäuse aufgesetzt wird. Hierdurch wird vermieden, dass versehentlich eine falsche Lufttrocknerpatrone montiert wird. Außerdem kann vermieden werden, dass Konkurrenzprodukte, die nicht mit den entsprechenden Einrichtungen ausgestattet sind, anstelle eines Originalproduktes verwendet werden.

Vorzugsweise ist vorgesehen, dass ein Verdrehen der Lufttrocknerpatrone gegenüber dem Ventilgehäuse um die axiale Achse beim Zusammenführen von Ventilgehäuse und Lufttrocknerpatrone durch ein Ineinandergreifen der Einrichtungen verhinderbar ist. Dies kann beispielsweise durch eine Kombination aus einem Zapfen und einer dem Zapfen zugeordneten Ausnehmung realisiert werden, wobei der Zapfen an dem Ventilgehäuse und die Ausnehmung an der Lufttrocknerpatrone angeordnet sein kann. Eine umgekehrte Ausführung ist auch denkbar, ebenso die Verwendung mehrerer Zapfen und Ausnehmungen. Weiterhin kann auch ein Verzahnungsprofil die Führung der Lufttrocknerpatrone beim Zusammenführen von Lufttrocknerpatrone und Ventilgehäuse übernehmen. Aufgrund der Führung kann die Dichtung bei der Montage der Luftfilterpatrone an dem Ventilgehäuse geschont werden.

Insbesondere kann vorgesehen sein, dass die Einrichtungen im gekoppelten Zustand von Ventilgehäuse und Lufttrocknerpatrone formschlüssig sind. Eine formschlüssige Verbindung kann eine besonders hohe mechanische Stabilität bieten.

Weiterhin kann vorgesehen sein, dass das Ventilgehäuse und die Lufttrocknerpatrone über einen Bajonettring lösbar koppelbar sind. Ein Bajonettring erlaubt eine einfache und schnelle Fixierung der auf das Ventilgehäuse aufgesetzten Lufttrocknerpatrone, wobei insbesondere keine Drehung der Lufttrocknerpatrone gegenüber dem Ventilgehäuse notwendig ist, was die Dichtungen schont.

Nützlicherweise kann vorgesehen sein, dass die von der Dichtung eingeschlossene Fläche an der Lufttrocknerpatrone, an dem getrocknete Druckluft in das Ventilgehäuse eintritt, zumindest genauso groß ist, wie ein Einströmquerschnitt an der Lufttrocknerpatrone und ein Ausströmquerschnitt des Ventilgehäuses, über den getrocknete Druckluft aus dem Ventilgehäuse austritt. Durch das Abstimmen der Größe der von der Dichtung eingeschlossenen Fläche an den Einströmquerschnitt an der Lufttrocknerpatrone und den Ausströmquerschnitt an dem Ventilgehäuse kann der Aufbau eines Staudrucks in diesem Bereich der Druckluftversorgungseinrichtung vermieden werden.

Die Erfindung wird nun mit Bezug auf die begleitende Zeichnung anhand einer bevorzugten Ausführungsform beispielhaft erläutert.

Es zeigt:

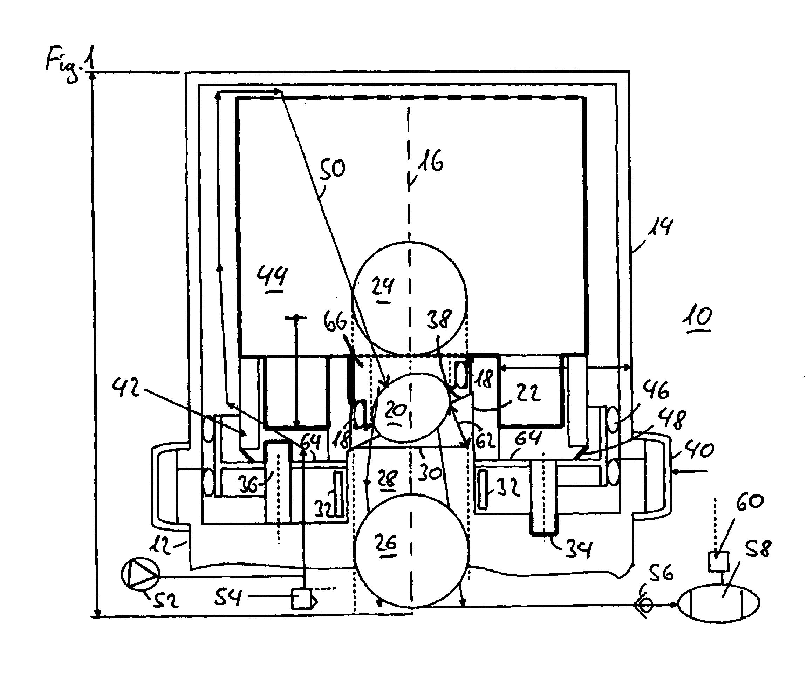

- Figur 1: einen Schnitt durch eine Lufttrocknerpatrone und ein Ventilgehäuse einer erfindungsgemäßen Druckluftversorgungseinrichtung.

Figur 1 zeigt einen Schnitt durch eine Lufttrocknerpatrone und ein Ventilgehäuse einer erfindungsgemäßen Druckluftversorgungseinrichtung. Die Darstellung der erfindungsgemäßen Druckluftversorgungseinrichtung 10 beschränkt sich im Wesentlichen auf die Lufttrocknerpatrone 14 und das Ventilgehäuse 12. Weitere Komponenten der Druckluftversorgungseinrichtung 10, wie ein Kompressor 52, ein Ablassventil 54, ein Rückschlagventil 56, ein Vorratsbehälter 58, der der Druckluftversorgungseinrichtung 10 nachgeordnete Verbraucher symbolisiert, und ein Drucksensor 60 sind lediglich angedeutet. Die Lufttrocknerpatrone 14, die im Wesentlichen zu einer axialen Achse 16 symmetrisch ausgebildet ist, ist mit dem Ventilgehäuse 12 verbunden dargestellt und über einen Bajonettring 40 in dieser Position fixiert. Die Lufttrocknerpatrone 14 und das Ventilgehäuse 12 weisen jeweils einander zugeordnete Zapfen und Aussparungen 36, 34 auf, die geeignet sind, eine dichte Verbindung zwischen der Lufttrocknerpatrone und dem Ventilgehäuse 12 nicht in allen mit Bezug auf die axiale Achse 16 der Lufttrocknerpatrone 14 definierten Winkelpositionen der Lufttrocknerpatrone 14 gegenüber dem Ventilgehäuse 12 zuzulassen, und als Fortsätze an eine Bodenplatte 64 anschließen. Anstelle einer Kombination aus einem Zapfen und einer zugeordneten Aussparung könnte beispielsweise auch ein Verzahnungsprofil verwendet werden. Ein an der Bodenplatte 64 angeordneter Anschluss 66 weist eine Schulter zum Abstützen einer Dichtung 18 auf, die mit dem Anschluss 66 beziehungsweise der Bodenplatte 64, falls der Anschluss 66 insgesamt als die Schulter betrachtet wird, beispielsweise über eine feste Rastverbindung oder eine dauerfeste Klebe- oder Schweißverbindung verbunden ist. Wesentliches Element der Schulter ist beispielsweise eine Scheibe, die die Dichtung in Richtung der axialen Achse 16 abstützt. Im Inneren der Lufttrocknerpatrone 14 ist weiterhin eine Trockenmittelbox 44 mit Trockenmittel und ein Ölfilter 42, der beispielsweise als ein Wickelfilter ausgeführt sein kann, nach dem Koaleszenzprinzip wirken kann und direkt auf die Trockenmittelbox 44 gewickelt sein kann, angeordnet. Die Trockenmittelbox 44 ist mit der Bodenplatte 64 fest beziehungsweise dauerfest verbunden, beispielsweise über eine Schnapp-, Klebe- oder Schweißverbindung. Vom Kompressor 52 erzeugte Druckluft strömt zunächst entlang eines Luftströmungsweges 50 in das Ventilgehäuse 12 ein und wird dort in Richtung auf die Lufttrocknerpatrone 14 umgelenkt, so dass sie zunächst durch den Ölfilter 42 hindurchströmt, wobei sie von Öl- und Schmutzpartikeln gereinigt wird. Anschließend wird die Druckluft innerhalb der Lufttrocknerpatrone 14 auf der von dem Ventilgehäuse 12 abgewandten Seite der Lufttrocknerpatrone 14 in die Trockenmittelbox 44 geführt, die sie nach dem Durchströmen der Trockenmittelbox 44 durch einen Einströmquerschnitt 24 in Richtung auf einen Anschluss 66 wieder verlässt. Der Anschluss 66 ist mit einem Lufttrocknerhals 22 über die Dichtung 18 dicht verbunden, so dass die getrocknete Druckluft durch ein Anschlussstück 28 zu einem Ausströmquerschnitt 26 geführt wird, wo sie das Ventilgehäuse 12 in Richtung auf den Vorratsbehälter 58 verlässt. Zur Veranschaulichung der Flächenverhältnisse sind der Einströmquerschnitt 24, der Ausströmquerschnitt 26 und die von der Dichtung 18 eingeschlossene Fläche 20 als Draufsicht in die ansonsten seitliche Darstellung eingezeichnet. Der Lufttrocknerhals 22 des Ventilgehäuses 12 und der Anschluss 66 können insbesondere gegenüber der axialen Achse 16 eine Schräge 62 aufweisen, so dass die von der Dichtung 18 eingeschlossene Fläche 20 größer ist als der sich in natürlicher Weise ergebende Querschnitt des Anschlusses 66. Dies ist vorteilhaft, da die Dichtung 18 von dem Anschluss 66 gestützt werden muss, wodurch eine Querschnittsverringerung verursacht wird, die eine Staudruckerhöhung zur Folge hat. Direkt hinter der Dichtung 18 im Bereich des Anschlussstücks 28 erfolgt lokal eine Aufweitung gegenüber dem Querschnitt des Anschlusses 66 bis auf eine Querschnittsfläche 30 des Anschlussstücks, wobei die Querschnittsfläche 30 zumindest genauso groß ist wie der Einströmquerschnitt 24 und der Ausströmquerschnitt 26. Auf diese Weise wird der Staudruck in der Druckluftversorgungseinrichtung 10 reduziert, da sich der Staudruck für Druckluft als kompressibles Medium aus den lokalen Strömungsquerschnitten ergibt und die gegenüber der Fläche 20 erfolgende Aufweitung im Bereich des Anschlussstückes 28 durch die Schräge 62 teilweise bereits im Bereich der Dichtung 18 erfolgt. Die Verbindung aus Anschluss 66 und Anschlussstück 28 weist also nur im Bereich der Dichtung 18 eine Einschnürung auf. Um eine eventuell im Bereich des Anschlussstückes 28, das heißt hinter der Einschnürung, erfolgende Temperaturerniedrigung zu kompensieren, ist eine Heizung 32 im Bereich des Anschlussstückes 28 vorgesehen. Neben der Dichtung 18 sind weiterhin eine weitere Dichtung 46 und ein Ventil 48, welches ein Ausspülen von Ölabscheidungen im Rahmen eines Regenerationsbetriebes unterstützt, zur Druckluftführung innerhalb der Lufttrocknerpatrone 14 vorgesehen.

Im Idealfall ist der Einströmquerschnitt 24 genauso groß wie der Ausströmquerschnitt 26 und die Fläche 20 zumindest genauso groß wie der Einströmquerschnitt 24 und der Ausströmquerschnitt 26, um im Bereich der Dichtung 18 keinen zusätzlichen Staudruck durch die Abstützung der Dichtung 18 zu erzeugen. Eine Anschlussfläche 38 des an dem Ventilgehäuse 12 angeordneten Lufttrocknerhals 22 an die Lufttrocknerpatrone 14, die genau wie die Fläche 20 eine Schräge 62 aufweist, ist daher dementsprechend größer.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Druckluftversorgungseinrichtung
- 12: Ventilgehäuse
- 14: Lufttrocknerpatrone
- 16: axiale Achse
- 18: Dichtung
- 20: Fläche
- 22: Lufttrocknerhals
- 24: Einströmquerschnitt
- 26: Ausströmquerschnitt
- 28: Anschlussstück
- 30: Querschnittsfläche
- 32: Heizung
- 34: Zapfen/Aussparung
- 36: Zapfen/Aussparung
- 38: Anschlussfläche
- 40: Bajonettring
- 42: Ölfilter
- 44: Trockenmittelbox
- 46: weitere Dichtung
- 48: Ventil
- 50: Luftströmungsweg
- 52: Kompressor
- 54: Ablassventil
- 56: Rückschlagventil
- 58: Vorratsbehälter
- 60: Drucksensor
- 62: Schräge
- 64: Bodenplatte
- 66: Anschluss

## Patentansprüche

1. Druckluftversorgungseinrichtung (10), insbesondere für ein Nutzfahrzeug,
- mit einem Ventilgehäuse (12) und einer mit dem Ventilgehäuse (12) verbundenen wechselbaren Lufttrocknerpatrone (14),
- wobei das Ventilgehäuse (12) und die Lufttrocknerpatrone (14) durch Zusammenführen entlang einer axialen Achse (16) miteinander koppelbar sind,
**dadurch gekennzeichnet, dass** eine von einer Dichtung (18) an der Lufttrocknerpatrone (14) eingeschlossene Fläche (20), an der getrocknete Druckluft aus der Lufttrocknerpatrone (14) in das Ventilgehäuse (12) eintritt, gegenüber der axialen Achse (16) der Lufttrocknerpatrone (14) in einem nicht rechten Winkel geneigt ist.

2. Druckluftversorgungseinrichtung (10) nach Anspruch 1, **dadurch gekennzeichnet, dass** ein in dem Ventilgehäuse (12) angeordnetes, im gekoppelten Zustand an die Dichtung (18) an der Lufttrocknerpatrone (14) anschließendes Anschlussstück (28) sich in seiner Querschnittsfläche (30) zumindest bis auf die von der Dichtung (18) eingeschlossene Fläche (20) aufweitet, wobei die Aufweitung lokal direkt unterhalb der Dichtung (18) erfolgt.

3. Druckluftversorgungseinrichtung (10) nach Anspruch 2, **dadurch gekennzeichnet, dass** im Bereich des Anschlussstücks (28) eine Heizung (32) angeordnet ist.

4. Druckluftversorgungseinrichtung (10) nach einem der vorhergehenden Ansprüche, **dadurch gekennzeichnet, dass** das Ventilgehäuse (12) und die Lufttrocknerpatrone (14) Einrichtungen (34, 36) aufweisen, die eine dichte Verbindung zwischen dem Ventilgehäuse (12) und der Lufttrocknerpatrone (14) nicht in allen mit Bezug auf die axiale Achse (16) der Lufttrocknerpatrone (14) definierten Winkelpositionen der Lufttrocknerpatrone (14) gegenüber dem Ventilgehäuse (12) zulassen.

5. Druckluftversorgungseinrichtung (10) nach Anspruch 4, **dadurch gekennzeichnet, dass** ein Verdrehen der Lufttrocknerpatrone (14) gegenüber dem Ventilgehäuse (12) um die axiale Achse (16) beim Zusammenführen von Ventilgehäuse (12) und Lufttrocknerpatrone (14) durch ein Ineinandergreifen der Einrichtungen (34, 36) verhinderbar ist.

6. Druckluftversorgungseinrichtung (10) nach Anspruch 4 oder 5, **dadurch gekennzeichnet, dass** die Einrichtungen (34, 36) im gekoppelten Zustand von Ventilgehäuse (12) und Lufttrocknerpatrone (14) formschlüssig sind.

7. Druckluftversorgungseinrichtung (10) nach einem der vorhergehenden Ansprüche, **dadurch gekennzeichnet, dass** das Ventilgehäuse (12) und die Lufttrocknerpatrone (14) über einen Bajonettring (40) lösbar koppelbar sind.

8. Druckluftversorgungseinrichtung (10) nach einem der vorhergehenden Ansprüche, **dadurch gekennzeichnet, dass** die von der Dichtung (18) eingeschlossene Fläche (20) an der Lufttrocknerpatrone (14), an dem getrocknete Druckluft in das Ventilgehäuse (12) eintritt, zumindest genauso groß ist, wie ein Einströmquerschnitt (24) an der Lufttrocknerpatrone (14) und ein Ausströmquerschnitt (26) des Ventilgehäuses (12), über den getrocknete Druckluft aus dem Ventilgehäuse (12) austritt.

9. Ventilgehäuse (12) für eine Druckluftversorgungseinrichtung (10), insbesondere nach einem der vorhergehenden Ansprüche, wobei das Ventilgehäuse (12) mit einer Lufttrocknerpatrone (14) lösbar verbunden werden kann, **dadurch gekennzeichnet, dass** eine Anschlussfläche (38) an eine von einer Dichtung (18) an der Lufttrocknerpatrone (14) eingeschlossene Fläche (20), an der getrocknete Druckluft aus der Lufttrocknerpatrone (14) in das Ventilgehäuse (12) eintritt, im verbundenen Zustand gegenüber einer axialen Achse (16) der Lufttrocknerpatrone (14) in einem nicht rechten Winkel geneigt ist.

10. Ventilgehäuse (12) nach Anspruch 9, **dadurch gekennzeichnet, dass** ein in dem Ventilgehäuse (12) angeordnetes, im gekoppelten Zustand an die Dichtung (18) an der Lufttrocknerpatrone (14) anschließendes Anschlussstück (28) sich in seiner Querschnittsfläche (30) zumindest bis auf die von der Dichtung (18) eingeschlossene Fläche (20) aufweitet, wobei die Aufweitung lokal direkt unterhalb der Dichtung (18) erfolgt.

11. Ventilgehäuse (12) nach Anspruch 10, **dadurch gekennzeichnet, dass** im Bereich des Anschlussstücks (28) eine Heizung (32) angeordnet ist.

12. Ventilgehäuse (12) nach einem der Ansprüche 9 bis 11, **dadurch gekennzeichnet, dass** das Ventilgehäuse (12) und die Lufttrocknerpatrone (14) Einrichtungen (34, 36) aufweisen, die eine dichte Verbindung zwischen dem Ventilgehäuse (12) und der Lufttrocknerpatrone (14) nicht in allen mit Bezug auf die axiale Achse (16) der Lufttrocknerpatrone (14) definierten Winkelpositionen der Lufttrocknerpatrone (14) gegenüber dem Ventilgehäuse (12) zulassen.

13. Ventilgehäuse (12) nach Anspruch 12, **dadurch gekennzeichnet, dass** ein Verdrehen der Lufttrocknerpatrone (14) gegenüber dem Ventilgehäuse (12) um die axiale Achse (16) beim Zusammenführen von Ventilgehäuse (12) und Lufttrocknerpatrone (14) durch ein Ineinandergreifen der Einrichtungen (34, 36) verhinderbar ist.

14. Ventilgehäuse (12) nach Anspruch 12 oder 13, **dadurch gekennzeichnet, dass** die Einrichtungen (34, 36) im gekoppelten Zustand von Ventilgehäuse (12) und Lufttrocknerpatrone (14) formschlüssig sind.

15. Ventilgehäuse nach einem der Ansprüche 9 bis 14, **dadurch gekennzeichnet, dass** das Ventilgehäuse (12) und die Lufttrocknerpatrone (14) über einen Bajonettring (40) lösbar koppelbar sind.

16. Ventilgehäuse nach einem der Ansprüche 9 bis 15, **dadurch gekennzeichnet, dass** die von der Dichtung (18) eingeschlossene Fläche (20) an der Lufttrocknerpatrone (14), an dem getrocknete Druckluft in das Ventilgehäuse (12) eintritt, zumindest genauso groß ist, wie ein Einströmquerschnitt (24) an der Lufttrocknerpatrone (14) und ein Ausströmquerschnitt (26) des Ventilgehäuses (12), über den getrocknete Druckluft aus dem Ventilgehäuse (12) austritt.

17. Lufttrocknerpatrone (14) für eine Druckluftversorgungseinrichtung (10), insbesondere nach einem der vorhergehenden Ansprüche, wobei die Lufttrocknerpatrone (14) mit einem Ventilgehäuse (12) lösbar verbunden werden kann, **dadurch gekennzeichnet, dass** eine von einer Dichtung (18) an der Lufttrocknerpatrone (14) eingeschlossene Fläche (20), an der getrocknete Druckluft aus der Lufttrocknerpatrone (14) in das Ventilgehäuse (12) eintritt, gegenüber der axialen Achse (16) der Lufttrocknerpatrone (14) in einem nicht rechten Winkel geneigt ist.

18. Lufttrocknerpatrone (14) nach Anspruch 17, **dadurch gekennzeichnet, dass** das Ventilgehäuse (12) und die Lufttrocknerpatrone (14) Einrichtungen (34, 36) aufweisen, die eine dichte Verbindung zwischen dem Ventilgehäuse (12) und der Lufttrocknerpatrone (14) nicht in allen mit Bezug auf die axiale Achse (16) der Lufttrocknerpatrone (14) definierten Winkelpositionen der Lufttrocknerpatrone (14) gegenüber dem Ventilgehäuse (12) zulassen.

19. Lufttrocknerpatrone (14) nach Anspruch 18, **dadurch gekennzeichnet, dass** ein Verdrehen der Lufttrocknerpatrone (14) gegenüber dem Ventilgehäuse (12) um die axiale Achse (16) beim Zusammenführen von Ventilgehäuse (12) und Lufttrocknerpatrone (14) durch ein Ineinandergreifen der Einrichtungen (34, 36) verhinderbar ist.

20. Lufttrocknerpatrone (14) nach Anspruch 18 oder 19, **dadurch gekennzeichnet, dass** die Einrichtungen (34, 36) im gekoppelten Zustand von Ventilgehäuse (12) und Lufttrocknerpatrone (14) formschlüssig sind.

21. Lufttrocknerpatrone (14) nach einem der Ansprüche 17 bis 20, **dadurch gekennzeichnet, dass** das Ventilgehäuse (12) und die Lufttrocknerpatrone (14) über einen Bajonettring (40) lösbar koppelbar sind.

## Claims

1. Compressed-air supply system (10), in particular for a commercial vehicle,
- comprising a valve housing (12) and an exchangeable air dryer cartridge connected to said valve housing (12),
- wherein said valve housing (12) and said air dryer cartridge (14) are adapted to be couple to each other by approaching them along an axial axis (16),
**characterised in that** a surface (20) enclosed by a seal (18) on said air dryer cartridge (14), on which dried compressed air enters from said air dryer cartridge (14) into said valve housing (12), is inclined at an angle other than a right angle relative to said axial axis (16) of said air drier cartridge (14).

2. Compressed-air supply system (10) according to Claim 1, **characterised in that** a connector element (28), which is disposed in said valve housing (12) and joins said seal (18) on said air dryer cartridge (14) in the coupled condition, flares at least up to said surface (20) enclosed by said seal (18), with said flared section being provided locally directly below said seal (18).

3. Compressed-air supply system (10) according to Claim 2, **characterised in that** in the region of said connecting element (28) a heating (32) is disposed.

4. Compressed-air supply system (10) according to any of the preceding Claims, **characterised in that** said valve housing (12) and said air dryer cartridge (14) comprise means (34, 36) that permit a tight connection between said valve housing (12) and said air dryer cartridge (14) not in all angular positions of said air dryer cartridge (14) relative to said valve housing (12), which are defined in relation to said axial axis (16) of said air dryer cartridge (14).

5. Compressed-air supply system (10) according to Claim 4, **characterised in that** rotation of said air dryer cartridge (14) relative to said valve housing (12) about said axial axis (16) in the approaching movement of said valve housing (12) and said air dryer cartridge (14) can be prevented by mutual engagement of said means (34, 36).

6. Compressed-air supply system (10) according to Claim 4 or 5, **characterised in that** in the coupled condition of said valve housing (12) and said air dryer cartridge (14) said means (34, 36) are positively engaged.

7. Compressed-air supply system (10) according to any of the preceding Claims, **characterised in that** said valve housing (12) and said air dryer cartridge (14) are adapted to be detachably coupled to each other via a bayonet ring (40).

8. Compressed-air supply system (10) according to any of the preceding Claims, **characterised in that** said surface (20) enclosed by said seal (18) on said air dryer cartridge (14), on which dried compressed air enters said valve housing (12), is at least of the same size as the in-flow cross-section (24) on said air dryer cartridge (14) and an out-flow cross-section (26) on said valve housing (12), through which dried compressed air leaves said valve housing (12).

9. Valve housing (12) for a compressed-air supply system (10), in particular according to any of the preceding Claims, wherein the valve housing (12) is adapted to be detachably connected to an air dryer cartridge (14), **characterised in that** in the connected condition, a joining surface (38) joining a surface (20) enclosed by a seal (18) on said air dryer cartridge (14), on which dried compressed air enters said valve housing (12), is inclined relative to an axial axis (16) of said air dryer cartridge (14) at an angle other than a a right angle.

10. Valve housing (12) according to Claim 9, **characterised in that** a connecting element (28) disposed in said valve housing (12) and joining said seal (18) on said air dryer cartridge (14) in the coupled condition flares on its cross-sectional area (30) at least up to the surface (20) enclosed by said seal (18), with said flared section being provided locally directly below said seal (18).

11. Valve housing (12) according to Claim 10, **characterised in that** a heating (32) is disposed in the region of said connecting element (28).

12. Valve housing (12) according to any of the Claims 9 to 11, **characterised in that** the valve housing (12) and said air dryer cartridge (14) comprise means (34, 36) that permit a tight connection between said valve housing (12) and said air dryer cartridge (14) not in all angular positions of said air dryer cartridge (14) relative to said valve housing (12), which are defined in relation to said axial axis (16) of said air dryer cartridge (14).

13. Valve housing (12) according to Claim 12, **characterised in that** rotation of said air dryer cartridge (14) relative to said valve housing (12) about said axial axis (16) in the approaching movement of said valve housing (12) and said air dryer cartridge (14) can be prevented by mutual engagement of said means (34, 36).

14. Valve housing (12) according to Claim 12 or 13, **characterised in that** in the coupled condition of said valve housing (12) and said air dryer cartridge (14) said means (34, 36) are in positive engagement.

15. Valve housing according to any of the Claims 9 to 14, **characterised in that** said valve housing (12) and said air dryer cartridge (14) are adapted to be detachably coupled to each other via a bayonet ring (40).

16. Valve housing according to any of the Claims 9 to 15, **characterised in that** said surface (20) enclosed by said seal (18) on said air dryer cartridge (14), on which dried compressed air enters said valve housing (12), is at least of the same size as the in-flow cross-section (24) on said air dryer cartridge (14) and an out-flow cross-section (26) on said valve housing (12), through which dried compressed air leaves said valve housing (12).

17. Air dryer cartridge (14) for a compressed-air supply system (10), in particular according to any of the preceding Claims, wherein said air dryer cartridge (14) is adapted to be detachably connected to a valve housing (12), **characterised in that** a surface (20) enclosed by said seal (18) on said air dryer cartridge (14), on which dried compressed air enters said valve housing (12), is inclined relative to the axial axis (16) of said air dryer cartridge (14) at an angle other than a right angle.

18. Air dryer cartridge (14) according to Claim 17, **characterised in that** said valve housing (12) and said air dryer cartridge (14) comprise means (34, 36) that permit a tight connection between said valve housing (12) and said air dryer cartridge (14) not in all angular positions of said air dryer cartridge (14) relative to said valve housing (12), which are defined in relation to said axial axis (16) of said air dryer cartridge (14).

19. Air dryer cartridge (14) according to Claim 18, **characterised in that** rotation of said air dryer cartridge (14) relative to said valve housing (12) about said axial axis (16) in the approaching movement of said valve housing (12) and said air dryer cartridge (14) can be prevented by mutual engagement of said means (34, 36).

20. Air dryer cartridge (14) according to Claim 18 or 19, **characterised in that** in the coupled condition of said valve housing (12) and said air dryer cartridge (14), said means (34, 36) are in positive engagement.

21. Air dryer cartridge (14) according to any of the Claims 17 to 20, **characterised in that** said valve housing (12) and said air dryer cartridge (14) are adapted to be detachably coupled to each other via a bayonet ring (40).

## Revendications

1. Dispositif (10) d'alimentation en air comprimé, notamment pour un véhicule utilitaire,
- comprenant un corps (12) de la vanne ayant une cartouche (14) de dessicateur d'air, remplaçable et reliée au corps (12) de la vanne,
- dans lequel le corps (12) de la vanne et la cartouche (14) de dessicateur d'air peuvent être accouplés l'un à l'autre par jonction le long d'un axe (16) axial,
**caractérisé en ce qu'**une surface (20), qui est enfermée par une étanchéité (18) sur la cartouche (14) de dessicateur d'air et sur laquelle de l'air comprimé séché de la cartouche (14) de dessicateur d'air entre dans le corps (12) de la vanne, est inclinée d'un angle qui n'est pas droit par rapport à l'axe (16) axial de la cartouche (16) de dessicateur d'air.

2. Dispositif (10) d'alimentation en air comprimé suivant la revendication 1, **caractérisé en ce qu'**une pièce (28) de raccordement disposée dans le corps (12) de la vanne et se raccordant à l'état accouplé à l'étanchéité (18) de la cartouche (14) de dessicateur d'air, s'élargit dans sa surface (30) de section transversale au moins jusqu'à la surface (20) enfermée par l'étanchéité (18), l'élargissement s'effectuant localement directement en dessous de l'étanchéité (18).

3. Dispositif (10) d'alimentation en air comprimé suivant la revendication 2, **caractérisé en ce qu'**un chauffage (32) est disposé dans la zone de la pièce (28) de raccordement.

4. Dispositif (10) d'alimentation en air comprimé suivant l'une des revendications précédentes, **caractérisé en ce que** le corps (12) de la vanne et la cartouche (14) de dessicateur d'air ont des dispositifs (34, 36), qui n'autorisent pas une liaison étanche entre le corps (12) de la vanne et la cartouche (14) de dessicateur d'air dans toutes les positions angulaires, définies par rapport à l'axe (16) axial de la cartouche (14) de dessicateur d'air, de la cartouche (14) de dessicateur d'air par rapport au corps (12) de la vanne.

5. Dispositif (10) d'alimentation en air comprimé suivant la revendication 4, **caractérisé en ce qu'**une rotation de la cartouche (14) de dessicateur d'air par rapport au corps (12) de la vanne autour de l'axe (16) axial est, lors de la jonction du corps (12) de la vanne et de la cartouche (14) de dessicateur d'air, empêchée par une prise mutuelle des dispositifs (34, 36).

6. Dispositif (10) d'alimentation en air comprimé suivant la revendication 4 ou 5, **caractérisé en ce que** les dispositifs (34, 36) sont à complémentarité de forme, lorsque le corps (12) de la vanne et la cartouche (14) de dessicateur d'air sont à l'état accouplé.

7. Dispositif (10) d'alimentation en air comprimé suivant l'une des revendications précédentes, **caractérisé en ce que** le corps (12) de la vanne et la cartouche (14) de dessicateur d'air peuvent être couplés d'une manière amovible par un anneau (40) à baïonnette.

8. Dispositif (10) d'alimentation en air comprimé suivant l'une des revendications précédentes, **caractérisé en ce que** la surface (20) enfermée par l'étanchéité (18) de la cartouche (14) de dessicateur d'air, par laquelle de l'air comprimé séché entre dans le corps (12) de la vanne, est au moins aussi grande qu'une section (24) transversale d'afflux de la cartouche (14) de dessicateur d'air et qu'une section (26) transversale de sortie du corps (12) de la vanne, par laquelle de l'air comprimé séché sort du corps (12) de la vanne.

9. Corps (12) de la vanne pour un dispositif (10) d'alimentation en air comprimé, notamment suivant l'une des revendications précédentes, dans lequel le corps (12) de la vanne peut être assemblé de manière amovible à une cartouche (14) de dessicateur d'air, **caractérisé en ce qu'**une surface (38) de raccordement à une surface (20), qui est fermée par une étanchéité (18) sur la cartouche (14) de dessicateur d'air et par laquelle de l'air comprimé séché sort de la cartouche (14) de dessicateur d'air dans le corps (12) de la vanne, est à l'état assemblé inclinée d'un angle qui n'est pas droit par rapport à un axe (16) axial de la cartouche (14) de dessicateur d'air.

10. Corps (12) de la vanne suivant la revendication 9, **caractérisé en ce qu'**une pièce (28) de raccordement disposée dans le corps (12) de la vanne et se raccordant à l'état accouplé à l'étanchéité (18) de la cartouche (14) de dessicateur d'air s'élargit dans sa surface (30) de section transversale au moins jusqu'à la surface (20) enfermée par l'étanchéité (18), l'élargissement s'effectuant localement directement en dessous de l'étanchéité (18).

11. Corps (12) de la vanne suivant la revendication 10, **caractérisé en ce qu'**un chauffage (32) est disposé dans la zone de la pièce (28) de raccordement.

12. Corps (12) de la vanne suivant l'une des revendications 9 à 11, **caractérisé en ce que** le corps (12) de la vanne et la cartouche (14) de dessicateur d'air ont des dispositifs (34, 36), qui n'autorisent pas une liaison étanche entre le corps (12) de la vanne et la cartouche (14) de dessicateur d'air dans toutes les positions angulaires, définies par rapport à l'axe (16) axial de la cartouche (14) de dessicateur d'air, de la cartouche (14) de dessicateur d'air par rapport au corps (12) de la vanne.

13. Corps (12) de la vanne suivant la revendication 12, **caractérisé en ce qu'**une rotation de la cartouche (14) de dessicateur d'air par rapport au corps (12) de la vanne autour de l'axe (16) axial est, lors de la jonction du corps (12) de la vanne et de la cartouche (14) de dessicateur d'air, empêchée par une prise mutuelle des dispositifs (34, 36).

14. Corps (12) de la vanne suivant la revendication 12 ou 13, **caractérisé en ce que** les dispositifs (34, 36) sont à complémentarité de forme lorsque le corps (12) de la vanne et la cartouche (14) de dessicateur d'air sont à l'état accouplé.

15. Corps (12) de la vanne suivant l'une des revendications 9 à 14, **caractérisé en ce que** le corps (12) de la vanne et la cartouche (14) de dessicateur d'air peuvent être accouplés d'une manière amovible par un anneau (40) à baïonnette.

16. Corps (12) de la vanne suivant l'une des revendications 9 à 15, **caractérisé en ce que** la surface (20) enfermée par l'étanchéité (18) de la cartouche (14) de dessicateur d'air, par laquelle de l'air comprimé séché entre dans le corps (12) de la vanne, est au moins aussi grande qu'une section (24) transversale d'afflux de la cartouche (14) de dessicateur d'air et qu'une section (26) transversale de sortie du corps (12) de la vanne, par laquelle de l'air comprimé séché sort du corps (12) de la vanne.

17. Cartouche (14) de dessicateur d'air pour un dispositif (10) d'alimentation en air comprimé, notamment suivant l'une des revendications précédentes, dans laquelle la cartouche (14) de dessicateur d'air peut être assemblée de manière amovible à un corps (12) de la vanne, **caractérisée en ce qu'**une surface (20), qui est enfermée par une étanchéité (18) sur la cartouche (14) de dessicateur d'air et sur laquelle de l'air comprimé séché de la cartouche (14) de dessicateur d'air entre dans le corps (12) de la vanne, est inclinée d'un angle qui n'est pas droit par rapport à l'axe (16) axial de la cartouche (16) de dessicateur d'air.

18. Cartouche (14) de dessicateur d'air suivant la revendication 17, **caractérisée en ce que** le corps (12) de la vanne et la cartouche (14) de dessicateur d'air ont des dispositifs (34, 36), qui n'autorisent pas une liaison étanche entre le corps (12) de la vanne et la cartouche (14) de dessicateur d'air dans toutes les positions angulaires, définies par rapport à l'axe (16) axial de la cartouche (14) de dessicateur d'air, de la cartouche (14) de dessicateur d'air par rapport au corps (12) de la vanne.

19. Cartouche (14) de dessicateur d'air suivant la revendication 18, **caractérisée en ce qu'**une rotation de la cartouche (14) de dessicateur d'air par rapport au corps (12) de la vanne autour de l'axe (16) axial est, lors de la jonction du corps (12) de la vanne et de la cartouche (14) de dessicateur d'air, empêchée par une prise mutuelle des dispositifs (34, 36).

20. Cartouche (14) de dessicateur d'air suivant la revendication 18 ou 19, **caractérisée en ce que** les dispositifs (34, 36) sont à complémentarité de forme lorsque le corps (12) de la vanne et la cartouche (14) de dessicateur d'air sont à l'état accouplé.

21. Cartouche (14) de dessicateur d'air suivant l'une des revendications 17 à 20, **caractérisée en ce que** le corps (12) de la vanne et là cartouche (14) de dessicateur d'air peuvent être accouplés d'une manière amovible par un anneau (40) à baïonnette.
